# EUROPEAN PATENT APPLICATION

(11) **EP 1 880 839 A2**
(43) Date of publication of application: **23.01.2008**
(21) Application number: 07252821.9
(22) Date of filing: 17.07.2007
(51) Int. Cl.: B32B 1/08, B32B 5/26, F41H 5/04, F42D 5/045

(54) **Rapidly deployable barrier for high-speed projectiles**

(30) Priority: 18.07.2006 US 458187
(71) Applicant: Sonoco Development, Inc., Hartsville, South Carolina 29550 (US)
(72) Inventor: Casper, Thomas Kevin, Florence South Carolina 29505 (US)
(74) Representative: Kinsler, Maureen Catherine

(57) **Abstract**

A rapidly deployable barrier is constructed from one or more rows of tubes that are wound from fiber materials. The tubes are arranged in parallel side-by-side relation abutting one another so as to form a wall. A tube in accordance with one embodiment of the invention comprises a plurality of layers of flexible fiber materials wound one upon another about an axis and adhered together to form the tube. The layers include one or more relatively low-penetration-resistant fiber layers and one or more relatively high-penetration-resistant fabric layers formed from fibers selected from the group consisting of polymer fibers, carbon fibers, glass fibers, ceramic fibers, natural fibers, and mixtures thereof. The tube can also include one or more resilient foam layers. The tube can be filled with concrete, sand, steel bar stock, or the like.

## Description

### BACKGROUND OF THE INVENTION

The present invention relates to barriers for protecting personnel from high-speed projectiles such as rifle bullets, shrapnel from explosive devices, and the like.

Personnel involved in police or military operations frequently have a need to construct a barrier for protection against threats such as high-speed projectiles and vehicles being driven through the barrier. Typically such barriers are constructed at the site of operations using sand bags, concrete, or mounds of dirt. The on-site construction of these types of barriers is time-consuming, and because the materials used for constructing them are heavy, the construction often requires the use of heavy equipment.

### BRIEF SUMMARY OF THE INVENTION

The present invention addresses the need for a light-weight, rapidly deployable barrier as an alternative to the heavy and cumbersome types of barriers that have typically been used in police and military operations. In accordance with one embodiment of the invention, a rapidly deployable barrier is constructed from one or more rows of light-weight tubes that are wound from fiber materials. The tubes are arranged in parallel side-by-side relation abutting one another so as to form a wall of the tubes. The tubes are specially constructed to be resistant to penetration by high-speed projectiles such as rifle bullets, shrapnel, and the like.

A tube in accordance with one embodiment of the invention comprises a plurality of layers of flexible fiber materials wound one upon another about an axis and adhered together to form the tube. The layers include one or more relatively low-penetration-resistant paperboard layers and one or more relatively high-penetration-resistant fabric layers formed from fibers selected from the group consisting of polymer fibers, carbon fibers, glass fibers, ceramic fibers, natural fibers, and mixtures thereof. In some embodiments, the fibers can comprise aramid fibers, carbon fibers, liquid crystal polymer fibers, ultra-high molecular weight polyethylene fibers, glass fibers, ceramic fibers, mineral-filled natural or synthetic fibers, or mixtures thereof.

The tube can be spirally wound from separate strips of the paperboard and fabric materials. Alternatively, the tube can be convolutely wound from a single sheet that comprises at least one layer of paperboard and at least one layer of the fabric. Adhesive is used for adhering the layers of the tube together.

The relatively high-penetration-resistant fabric can be made from yarns constructed from the fibers. The fabric can be woven, knitted, felted, fabricated into a nonwoven fabric, or formed in any other suitable fashion. The fabric can comprise yarns of various types and various sizes.

The paperboard materials used in the tube can be treated to be water-resistant. As one example, the paperboard can be sized with a sizing composition such as ASA, AKD, rosin/alum, or the like.

The tube in preferred embodiments is constructed so that the tube is foldable into a collapsed or flattened configuration for shipping and storage. When it is time to deploy the barrier, a plurality of the collapsed tubes can be reshaped into a tubular configuration and can be erected in a row to form a wall. The tubes are light in weight and thus are easily handled by personnel without the use of heavy equipment.

Part of the lengths of the tubes can be buried in the ground, the portions of the tubes projecting above ground forming a barrier. The tubes optionally can be filled with a material such as sand, concrete, steel bar stock, or other material that helps prevent complete penetration of projectiles and/or vehicles through the barrier. The barrier can comprise a single row of tubes, or alternatively the barrier can comprise two or more rows of tubes one behind another. The tubes in one row can be staggered relative to tubes in an adjacent row such that each juncture between two tubes in one row is in front of or behind a tube in the adjacent row.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a perspective view of a rapidly deployable barrier in accordance with one embodiment of the invention;
FIG. 2 is a cross-sectional view through a tube in accordance with one embodiment of the invention;
FIG. 3 a top view of a rapidly deployable barrier in accordance with another embodiment of the invention;
FIG. 4 depicts a tube being convolutely wound in accordance with a further embodiment of the invention;
FIG. 5 is a cross-sectional view along line 5-5 in FIG. 4;
FIG. 6 is a fragmentary cross-sectional view through a wall of a tube in accordance with yet another embodiment of the invention;
FIG. 7 shows a tube in accordance with the invention in a collapsed or flattened configuration for shipping and storage; and
FIG. 8 shows a tube in accordance with an alternative embodiment of the invention.

### DETAILED DESCRIPTION OF THE INVENTION

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

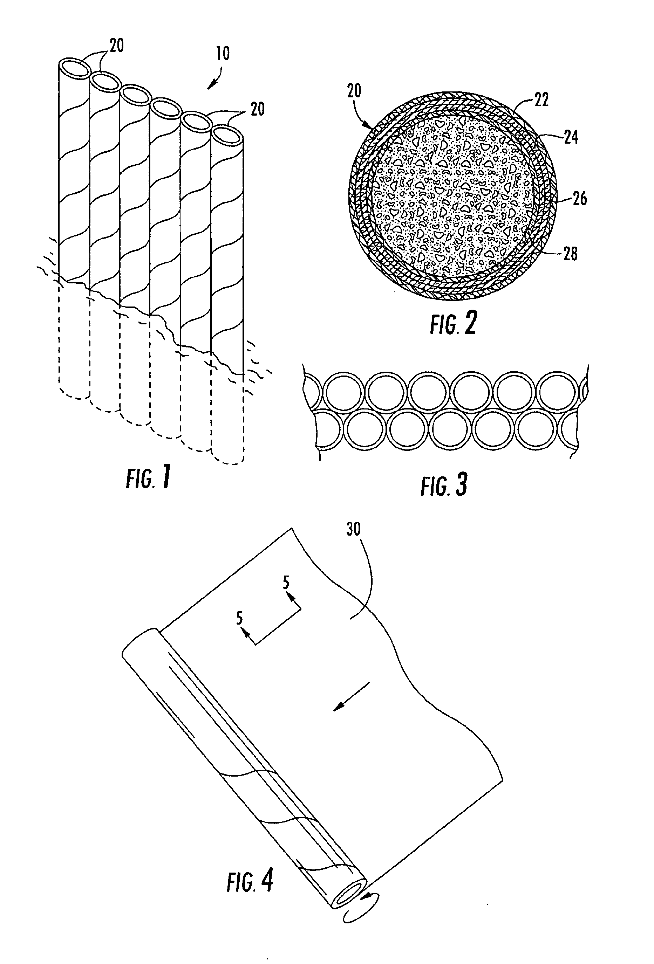

A rapidly deployable barrier 10 in accordance with one embodiment of the invention is shown in FIG. 1. The barrier **10** comprises a plurality of wound tubes **20** that are hollow and generally cylindrical. By "cylindrical" is meant that the cross-sectional shape of the tube is substantially constant along the length of the tube, but the term "cylindrical" is not intended to imply that the cross-sectional shape must be circular. The tubes can have various cross-sectional shapes. The tubes **20** are positioned in parallel side-by-side relation such that the tubes are abutting one another to form one or more walls. A wall can be generally planar as shown in FIG. 1, or alternatively the tubes can be arranged to form non-planar walls (e.g., arcuate, L-shaped, C-shaped, polygonal, etc.). The wall(s) can be generally vertically oriented as shown, or can have other orientations. As an example, a generally vertical wall can be erected by digging a trench and burying the lower ends of the tubes in the trench and filling the trench around the tubes, as illustrated in FIG. 1. While the tubes **20** forming the barrier **10** in FIG. 1 are shown as all being circular and having the same diameter, alternatively the barrier can include tubes of two or more different cross-sectional shapes and/or two or more different diameters.

FIG. 2 is a cross-sectional view through one of the tubes **20.** The tube comprises a multilayered structure formed by winding flexible sheets or layers of fiber materials one upon another about an axis and adhering the layers together with adhesive. In the illustrated embodiment of FIG. 2, the tube comprises four layers **22, 24, 26, 28.** The outermost layer **22** can comprise a relatively high-penetration-resistant fabric formed of fibers. As non-limiting examples, the fibers can be selected from aramid fibers (e.g., KEVLAR®, NOMEX®, etc.), carbon fibers, liquid crystal polymer fibers (e.g., VECTRAN®), ultra-high molecular weight polyethylene fibers (e.g., SPECTRA® or DYNEEMA®), glass fibers, ceramic fibers, mineral-filled natural or synthetic fibers (e.g., SiC-filled or UBr-filled fibers), and mixtures thereof. The filled natural fibers can be produced by "lumen loading" the fibers with particles of the filler material. The fabric can be made from yarns constructed from the fibers. The fabric can be woven, knitted, felted, fabricated into a nonwoven fabric, or formed in any other suitable fashion. The fabric can comprise yarns of various types and various sizes. The fabric basis weight can range from about 10 lb/msf to about 160 lb/msf.

The next two layers **24** and **26** can comprise a relatively low-penetration-resistant fiber material. As an example, the layers **24** can comprise paperboard layers. It will be understood that two layers of paperboard are shown merely as an example, and the number and positioning of paperboard layers within the tube wall can vary. One or more layers of the tube can comprise paperboard. The paperboard material can be treated to be water-resistant. For example, the paperboard can be sized with a sizing composition such as alkenyl succinic anhydride (ASA), alkyl ketene dimer (AKD), or rosin and alum. The paperboard layer(s) can have a thickness or caliper ranging from about 0.13 mm (0.005 inch) to about 1.14 mm (0.045 inch). The density of the paperboard material can range from about 0.5 g/cc to about 0.9 g/cc.

The innermost layer **28** comprises another layer of the relatively high-penetration-resistant fabric. The fabric of the innermost layer **28** can be identical to the fabric of the outermost layer **22.** Alternatively, the two fabrics can be different in some respect (e.g., different fiber materials and/or different basis weights and/or different fabric constructions). While two fabric layers **22, 28** are shown in FIG. 2, the invention is not limited to any particular number or positioning of fabric layers within the tube wall. The tube can comprise one or more fabric layers.

As illustrated in FIG. 1, the tubes 20 can comprise spirally wound tubes formed in a generally conventional spiral tube-making process from multiple separate plies or layers of the relatively low-penetration-resistant material and relatively high-penetration-resistant fabric material. The plies are spirally wound one upon another about a cylindrical mandrel and are adhered together with adhesive applied to the plies as they are advanced to the mandrel. Preferably the mandrel is circular in cross-section and the tube formed on the mandrel is advanced in screw fashion along the mandrel by a winding belt, as known in the spiral tube-making art. In this manner, a continuous tube is formed on the mandrel. The tube is cut into desired lengths by a suitable cutting saw or the like arranged downstream of the mandrel.

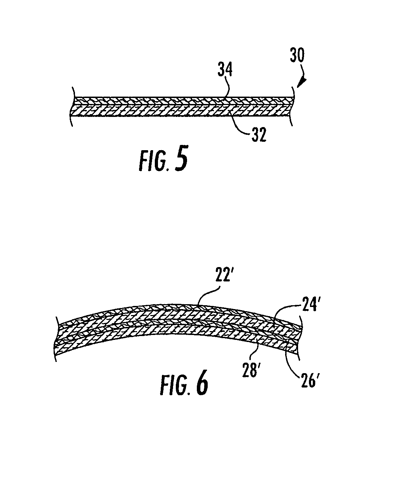

Alternatively, a tube in accordance with the invention can be made by a convolute winding process as schematically depicted in FIG. 4. A sheet **30** having a width equal to the desired length of the tube to be produced is prepared and adhesive is applied to one of its surfaces. The sheet is then rolled up in window shade fashion to form the convolutely wound tube. The sheet **30** in one embodiment is shown in FIG. 5. The illustrated sheet comprises a layer **32** of paperboard and a layer **34** of relatively high-penetration-resistant fabric overlying the paperboard layer. The two layers can be joined together, such as by adhesive, prior to convolute winding. The sheet **30** can comprise more than two layers (e.g., more than one layer of paperboard and/or more than one layer of fabric).

FIG. 6 shows a cross-sectional view through a portion of a wall of a tube **20'** in accordance with another embodiment of the invention, which can be made by spiral winding or by the convolute winding process. In particular, the tube 20' can be a convolutely wound tube made from the sheet 30 shown in FIG. 5, or can be a spirally wound tube prepared from four plies. The tube has an outermost layer **22'** of the fabric, an adjacent layer **24'** of paperboard, a next adjacent layer 26' of fabric, and an innermost layer **28'** of paperboard.

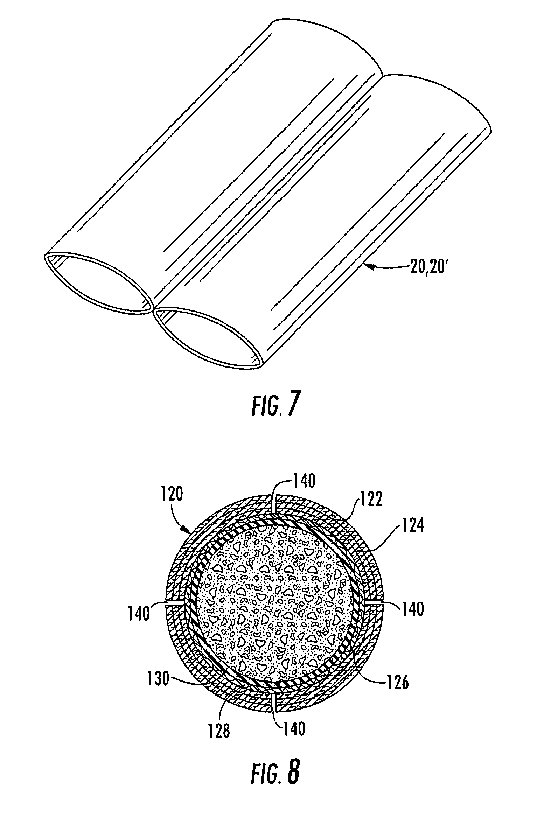

The tubes **20, 20'** in accordance with the invention preferably are formed so that they are collapsible or foldable into a generally flattened configuration for shipping and storage, as illustrated in FIG. 7. To make the tube collapsible, preferably the wall thickness of the tube is small enough that the tube has substantial flexibility and can be folded along longitudinally extending fold lines that do not have to be pre-formed (e.g., by scoring or other weakening of the wall). This ability to be collapsed without pre-formed fold lines is termed "natural collapsibility" herein. The maximum wall thickness that can be employed while preserving the natural collapsibility of the tube depends in part on the tube diameter; as the diameter increases, the maximum allowable wall thickness also increases. The maximum allowable wall thickness for natural collapsibility also depends on the stiffness of the tube wall, which in turn depends on the particular makeup of the tube (i.e., what materials are used, the proportions of each material, the locations of the various layers of different materials relative to one another, etc.). Thus, no general rule of thumb dictating the maximum allowable wall thickness for natural collapsibility can be given.

Alternatively, the tube can include one or more pre-formed fold lines. A pre-formed fold line can be made by scoring partially through the thickness of the tube wall. It is preferred that such scoring not cut through any of the fabric layers of the tube. As an example, the tube can have the fabric layer(s) located radially inwardly of one or more paperboard layers, and the scoring can extend only through one or more radially outwardly located paperboard layers.

When deploying the barrier **10** such as shown in FIG. 1, the tubes **20** can be left hollow. Alternatively, for increased protection against penetration by high-speed projectiles, the tubes can be filled with a dense material such as sand, concrete, or the like, as shown in FIG. 2. The use of a loose filler material such as sand is preferred because the barrier can be dismantled, the tubes can be emptied of the sand (and collapsed for transportation or storage, if the tubes are collapsible), and the tubes and the sand can later be salvaged for reuse. The invention is also advantageous because the tubes are combustible and thus can be burned at the site, if desired.

In other embodiments, the tubes can be filled with steel bar stock. The tubes filled with the bar stock can be partially buried to form a barrier that has substantial strength so as to substantially preclude the possibility of a vehicle being driven through the barrier.

When the tube is filled with loose material such as sand, a bullet hole formed through the tube wall can allow sand to escape through the hole, which is undesirable. To address this problem, a tube in accordance with another embodiment of the invention can include a resilient foam layer that tends to form a self-closing hole when penetrated by a projectile. A tube **120** having such a foam layer is shown in FIG. 8. The tube **120** includes a radially outermost paperboard layer **122,** a next adjacent paperboard layer **124,** a further paperboard layer **126,** a fabric layer **128,** and a foam liner layer **130** at the innermost surface of the tube. The foam liner layer **130** can comprise any suitable polymer foam such as polyethylene, polypropylene, polyurethane, EVA, etc., as long as the foam has sufficient resilience to form self-closing holes when penetrated by projectiles. Tubes in accordance with the invention can include one or more such resilient foam layers.

The tube 120 also includes pre-formed fold lines **140** along which the tube can fold for collapsing the tube into a generally flattened configuration for shipping and storage. A fold line **140** is formed by scoring through one or more of the outer paperboard layers **122, 124, 126** with a suitable cutting implement. The score line preferably does not penetrate the fabric layer **128** or the foam layer **130.** In one embodiment, the tube includes four such pre-formed fold lines **140** spaced equally about the circumference of the tube.

Tubes in accordance with the invention can be made in various diameters and various lengths. For example, the tubes can range in diameter from about 1 inch to about 36 inches. The length of the tubes can range from about 4 feet on up. Particularly when the tubes are made by the continuous spiral process, there is no theoretical upper limit on length, but for practical reasons it is desirable to keep the tubes to a reasonable length so that they can be readily shipped and handled. Generally, tubes are most conveniently shipped and handled when they do not exceed about 15 feet in length.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A wound fiber tube useful in combination with a plurality of other such tubes for constructing a barrier against high-speed projectiles, the tube comprising:
a plurality of layers of flexible fiber materials wound one upon another about an axis and adhered together to form the tube, the layers including one or more relatively low-penetration-resistant fiber layers and one or more relatively high-penetration-resistant fabric layers formed from fibers selected from the group consisting of polymer fibers, carbon fibers, glass fibers, ceramic fibers, natural fibers, and mixtures thereof.

2. The wound fiber tube of claim 1, wherein the fabric layers are formed from fibers selected from the group consisting of aramid fibers, carbon fibers, liquid crystal polymer fibers, ultra-high molecular weight polyethylene fibers, glass fibers, ceramic fibers, mineral-filled natural or synthetic fibers, and mixtures thereof.

3. The wound fiber tube of claim 1, wherein the tube is spirally wound.

4. The wound fiber tube of claim 1, wherein the tube is convolutely wound from a sheet comprising one or more paperboard layers and one or more relatively high-penetration-resistant fabric layers, the sheet being convolutely wound to form the tube.

5. The wound fiber tube of claim 1, wherein the tube is foldable into a collapsed configuration having reduced volume for shipping and storage.

6. The wound fiber tube of claim 1, wherein the one or more relatively low-penetration-resistant fibers layers comprise paperboard.

7. The wound fiber tube of claim 6, wherein the paperboard comprises paperboard sized with a sizing composition for imparting water-resistance to the paperboard.

8. The wound fiber tube of claim 1, further comprising one or more resilient foam layers.

9. The wound fiber tube of claim 8, wherein one of the one or more resilient foam layers is an innermost layer of the tube.

10. The wound fiber tube of claim 1, further comprising longitudinal pre-formed fold lines formed in the tube along which the tube can fold for collapsing the tube into a generally flattened configuration for shipping and storage.

11. The wound fiber tube of claim 10, where there are four of the pre-formed fold lines spaced equally about the circumference of the tube.

12. A rapidly deployable barrier for high-speed projectiles, comprising:
at least one row of wound fiber tubes disposed in parallel abutting relation to form a wall, each wound fiber tube comprising a plurality of layers of flexible fiber materials wound one upon another about an axis and adhered together to form the tube, the layers including one or more relatively low-penetration-resistant fiber layers and one or more relatively high-penetration-resistant fabric layers formed from fibers selected from the group consisting of polymer fibers, carbon fibers, glass fibers, ceramic fibers, natural fibers, and mixtures thereof.

13. The rapidly deployable barrier of claim 12, wherein the one or more relatively high-penetration-resistant fabric layers are formed from fibers selected from the group consisting of aramid fibers, carbon fibers, liquid crystal polymer fibers, ultra-high molecular weight polyethylene fibers, glass fibers, ceramic fibers, mineral-filled natural or synthetic fibers, and mixtures thereof.

14. The rapidly deployable barrier of claim 12, wherein one or more of the tubes are spirally wound.

15. The rapidly deployable barrier of claim 12, wherein one or more of the tubes are convolutely wound from a sheet comprising one or more relatively low-penetration-resistant fiber layers and one or more relatively high-penetration-resistant fabric layers, the sheet being convolutely wound to form the tube.

16. The rapidly deployable barrier of claim 12, wherein each tube is foldable into a collapsed configuration having reduced volume for shipping and storage.

17. The rapidly deployable barrier of claim 12, wherein the one or more relatively low-penetration-resistant fiber layers of each tube comprise paperboard.

18. The rapidly deployable barrier of claim 16, wherein the paperboard comprises paperboard sized with a sizing composition.

19. The rapidly deployable barrier of claim 12, wherein the rapidly deployable barrier comprises a first row of the tubes and a second row of the tubes positioned parallel to and behind the first row, the tubes of the second row being staggered relative to the tubes of the first row such that a juncture between any two tubes of the first row is backed up by a tube of the second row.

20. The rapidly deployable barrier of claim 12, wherein the tubes are filled with a material for enhancing penetration-resistance of the tubes.

21. The rapidly deployable barrier of claim 20, wherein the material comprises sand.

22. The rapidly deployable barrier of claim 20, wherein the material comprises concrete.

23. A construction member for constructing a barrier against high-speed projectiles, comprising:
a hollow tube comprising a plurality of layers of flexible material wound one upon another about an axis of the tube and adhered together to form the tube, the layers including a layer of resilient foam; and
a loose particulate material filling an interior space defined by the tube to enhance the barrier performance of the construction member.

24. The construction member of claim 23, wherein the layer of resilient foam forms an innermost surface of the tube.
